# EUROPEAN PATENT SPECIFICATION

(11) **EP 4 199 554 B1**
(45) Date of publication and mention of the grant of the patent: **01.10.2025**
(21) Application number: 22213471.0
(22) Date of filing: 14.12.2022
(51) Int. Cl.: H04W 4/40, B60R 16/023, B60R 16/02

(54) **INFORMATION PROCESSING APPARATUS, INFORMATION PROCESSING METHOD AND PROGRAM**
INFORMATIONSVERARBEITUNGSVORRICHTUNG, INFORMATIONSVERARBEITUNGSVERFAHREN UND PROGRAMM
APPAREIL DE TRAITEMENT D'INFORMATIONS, PROCÉDÉ DE TRAITEMENT D'INFORMATIONS ET PROGRAMME

(30) Priority: 17.12.2021 JP 2021205533
(43) Date of publication of application: 21.06.2023
(73) Proprietor: TOYOTA JIDOSHA KABUSHIKI KAISHA, Aichi-Ken 471-8571 (JP)
(72) Inventor: NISHIDA, Junichi, Toyota-shi, Aichi-Ken 471-8571 (JP)
(74) Representative: Cabinet Beau de Loménie

(56) References cited:
- EP-B1- 3 140 710
- US-A1- 2013 179 003
- WENMAO LIU ET AL: "An Autonomous Road Side Infrastructure Based System in Secure VANETs", WIRELESS COMMUNICATIONS, NETWORKING AND MOBILE COMPUTING, 2009. WICOM '09. 5TH INTERNATIONAL CONFERENCE ON, IEEE, PISCATAWAY, NJ, USA, 24 September 2009 (2009-09-24), pages 1 - 6, XP031553879, ISBN: 978-1-4244-3692-7

## Description

### BACKGROUND

### Technical Field

The present disclosure relates to an information processing apparatus, an information processing method and a program.

### Description of the Related Art

Patent Literature 1 discloses an information display apparatus for vehicle. The information display apparatus for vehicle disclosed in Patent Literature 1 is an apparatus that acquires information from an external apparatus by establishing wireless communication between the external apparatus and a wireless communication unit and displays the information on a display unit. The information display apparatus for vehicle stores a wireless standard for establishing wireless communication between an external apparatus and the wireless communication unit and certification information that certifies the wireless standard, for each of a plurality of destination places. Further, the information display apparatus for vehicle acquires destination place information showing a destination place of the vehicle and switches the wireless communication unit to be adapted to a wireless standard stored in a storage in association with the destination place. Then, when an operation to display certification information is performed, the information display apparatus for vehicle displays certification information stored in the storage in association with the destination place, on the display unit.
Patent literature 2 deals with geo-fencing for unmanned aerial vehicles.
Patent literature 3 deals with an information processing system, method and program, for checking a configuration of a vehicle.
Non-patent literature 1 deals with an autonomous road side infrastructure based system in secure vehicular ad hoc networks (VANETs).

Patent literature 1: Japanese Patent Laid-Open No. 2018-40687
Patent literature 2: European patent EP 3 140 710 B1
Patent literature 3: US patent application US 2013/179003 A1
Non-patent literature 1: W. Liu, H. Zhang and W. Zhang, "An Autonomous Road Side Infrastructure Based System in Secure VANETs," 2009 5th International Conference on Wireless Communications, Networking and Mobile Computing, Beijing, China, 2009, pp. 1-6.

### SUMMARY

An object of the present invention is to improve operation of a radio wave equipment mounted on a vehicle, and in particular to prevent radio wave equipment mounted on a vehicle from being into a state of not being legally certificated with regard to performing transmission/reception of radio waves using a predetermined standard.

An information processing apparatus according to a first aspect of the present invention is defined in claim 1.

An information processing method according to a second aspect of the present invention is defined in claim 8.

A program according to a third aspect of the present invention is defined in claim 15.

According to the present invention, it becomes possible to prevent radio wave equipment mounted on a vehicle from being into a state of not being legally certificated with regard to performing transmission/reception of radio waves using a predetermined standard. In other words, it becomes possible to suitably operate the radio wave equipment, and in particular to suitably operate the radio wave equipment according to a predetermined standard required for radio wave telecommunications.

### BRIEF DESCRIPTION OF THE DRAWINGS

Fig. 1 is a diagram illustrating a schematic configuration of a certification system;
Fig. 2 is a sequence diagram illustrating a flow of information processing in the certification system;
Fig. 3 is a block diagram schematically illustrating an example of a functional configuration of a management server;
Fig. 4 is a diagram illustrating an example of a table configuration of area information held in an area information database;
Fig. 5 is a diagram illustrating an example of a table configuration of history information held in a history information database;
Fig. 6 is a flowchart of a determination process; and
Fig. 7 is a flowchart of a transmission process.

### DESCRIPTION OF THE EMBODIMENTS

A case is assumed where a vehicle mounted with radio wave equipment moves from an area where the vehicle currently exists to another area. Here, the radio wave equipment mounted on the vehicle performs transmission/reception of radio waves using a predetermined standard. At this time, when the area where the vehicle exists changes by the vehicle moving, there may be a case where the radio wave equipment is into a state of legal certification in the area not having been acquired with regard to performing transmission/reception of radio waves using the
transmitting first information related to the legal certification to an external apparatus if the legal certification has not been acquired with regard to the radio wave equipment performing transmission/reception of radio waves using the predetermined standard.

According to the present disclosure, it becomes possible to prevent radio wave equipment mounted on a vehicle from being into a state of not being legally certificated with regard to performing transmission/reception of radio waves using a predetermined standard. In other words, it becomes possible to suitably operate the radio wave equipment, and in particular to suitably operate the radio wave equipment according to a predetermined standard required for radio wave telecommunications.

### BRIEF DESCRIPTION OF THE DRAWINGS

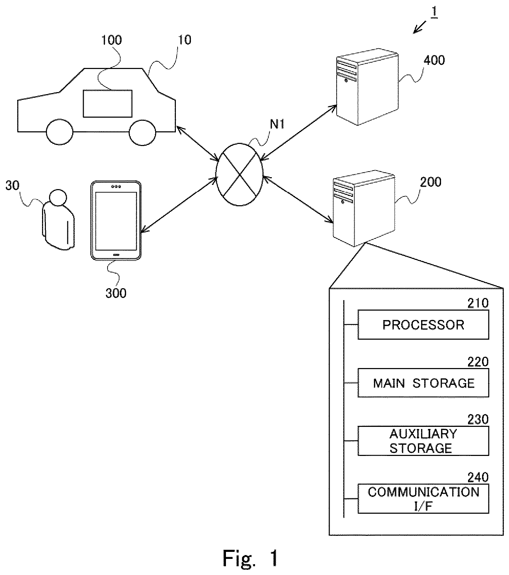

Fig. 1 is a diagram illustrating a schematic configuration of a certification system;

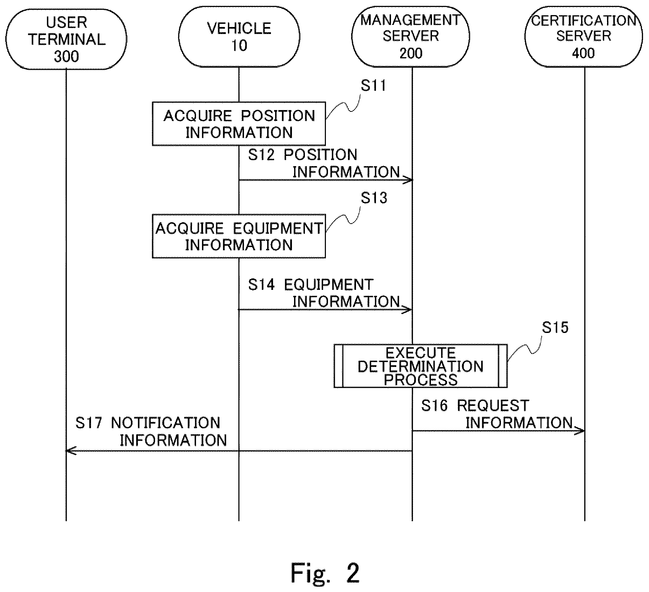

Fig. 2 is a sequence diagram illustrating a flow of information processing in the certification system; predetermined standard. Then, there is a possibility that the radio wave equipment performs transmission/reception of radio waves using the predetermined standard in the state of not being legally certificated.

An information processing apparatus according to a first aspect of the present disclosure is an information processing apparatus that manages legal certification about radio wave equipment for performing transmission/reception of radio waves using predetermined standards. A control unit of the information processing apparatus according to the first aspect identifies an area where a vehicle exists based on position information about the vehicle. Further, the control unit of the information processing apparatus performs a predetermined determination process. Here, the predetermined determination process is a process for determining whether or not legal certification in the identified area (which may be hereinafter referred to simply as "legal certification") has been acquired with regard to radio wave equipment performing transmission/reception of radio waves using a predetermined standard. Then, the control unit transmits first information related to the legal certification to an external apparatus if the legal certification has not been acquired with regard to the radio wave equipment performing transmission/reception of radio waves using the predetermined standard.
By "legal certification" is understood an assessment that the equipment is able to suitably perform transmission/reception of radio waves using the predetermined standard. A radio wave equipment "legally certified" is thus capable of suitably performing transmission/reception according to the predetermined standard.

Here, the first information may include, for example, information for requesting issuance of the legal certification with regard to the radio wave equipment performing transmission/reception of radio waves using the predetermined standard. In this case, the external apparatus includes a predetermined server apparatus related to acquisition of the legal certification. Thereby, an administrator or the like of the predetermined server apparatus can grasp that issuance of the legal certification is requested. Then, issuance and the like of the legal certification with regard to the radio wave equipment performing transmission/reception of radio waves using the predetermined standard is performed by the administrator or the like of the predetermined server apparatus. As a result, the radio wave equipment is prevented from being into the state of not being legally certificated with regard to performing transmission/reception of radio waves using the predetermined standard.

Further, the first information may include, for example, information for notifying that the legal certification has not been acquired with regard to the radio wave equipment performing transmission/reception of radio waves using the predetermined standard. In this case, the external apparatus includes a terminal related to a user of the vehicle. Thereby, it becomes possible for the user of the vehicle to recognize that the radio wave equipment is in the state of not being legally certified with regard to performing transmission/reception of radio waves using the predetermined standard. Then, it is prevented that the radio wave equipment is used by the user of the vehicle. As a result, the radio wave equipment is prevented from being into the state of not being legally certificated with regard to performing transmission/reception of radio waves using the predetermined standard.

As described above, the first information is transmitted by the information processing apparatus according to the present disclosure. Thereby, it becomes possible to prevent radio wave equipment from being into the state of not being legally certificated with regard to performing transmission/reception of radio waves using a predetermined standard. In other words, notification of the first information allows the user to assess whether the radio wave equipment is capable of being operated according to the predetermined standard, thereby assisting the user in performing the task of operating the radio wave equipment.

Specific embodiments of the present disclosure will be described below based on drawings. The sizes, materials, shapes, a relative arrangement and the like of components described in the present embodiments are not intended to limit the technological scope of the present disclosure only thereto unless otherwise stated.

### <First embodiment>

### (System overview)

A certification system 1 in the present embodiment will be described based on Figs. 1 and 2. Fig. 1 is a diagram illustrating a schematic configuration of the certification system 1. The certification system 1 is configured including a vehicle 10, communication equipment 100, a management server 200, a user terminal 300 and a certification server 400. In the certification system 1, the vehicle 10, the management server 200, the user terminal 300 and the certification server 400 are mutually connected via a network N1. As the network N1, for example, a WAN (wide area network), which is a worldwide public communication network such as the Internet, or a telephone communication network for mobile phones and the like may be adopted. The vehicle 10 and the communication equipment 100 are mutually connected via an in-vehicle network.

### (Vehicle)

The vehicle 10 is a vehicle used by a user 30. The communication equipment 100 is mounted on the vehicle 10. The communication equipment 100 mounted on the vehicle 10 is radio wave communication equipment that performs radio wave communication using a predetermined communication standard. The communication equipment 100 is, for example, equipment that locks and unlocks the vehicle 10 by performing radio wave communication with predetermined equipment. The communication equipment 100 may be, for example, communication equipment that performs transmission/reception of various data by connecting to the network N1. The communication equipment 100 in the present embodiment corresponds to "radio wave equipment" in the present disclosure.

At this time, if the area where the vehicle 10 exists changes by the vehicle 10 moving, there may be a case where a state occurs in which legal certification in the area where the vehicle 10 exists (which may be hereinafter referred to simply as "legal certification") has not been acquired with regard to the communication equipment 100 performing radio wave communication using a predetermined standard. Then, there is a possibility that the communication equipment 100 performs radio wave communication using the predetermined standard in the state of not being legally certificated.

Here, the case where the state occurs in which the legal certification has not been acquired with regard to the communication equipment 100 performing radio wave communication is, for example, a case where the vehicle 10 has moved to a foreign country by traveling itself or being transported. In this case, it may be necessary, in the country of the movement destination of the vehicle 10, to acquire the legal certification based on a law, a regulation or the like of the movement-destination country with regard to the communication equipment 100 performing radio wave communication using the predetermined communication standard. Thus, the area of the movement destination of the vehicle 10 where the state occurs in which the legal certification has not been acquired with regard to the communication equipment 100 performing radio wave communication using the predetermined communication standard is a foreign country. However, the area of the movement destination of the vehicle 10 where the state occurs in which the legal certification has not been acquired with regard to the communication equipment 100 performing radio wave communication using the predetermined communication standard is not necessarily a foreign country if the area is an area where the legal certification with regard to the communication equipment 100 performing radio wave communication using the predetermined communication standard is newly required. The communication standard that the communication equipment 100 uses may be such that is defined for each frequency band or may be a standard for mobile wireless communication.

### (Certification server)

The certification server 400 is a server related to legal certification of communication equipment. Legal certification is issued by the certification server 400 to communication equipment that has not acquired legal certification with regard to performing radio wave communication using a predetermined communication standard. The certification server 400 is, for example, a server used by a certification authority that issues legal certification to communication equipment. Further, the certification server 400 may be a server apparatus managed by the manufacturer or the like of the communication equipment 100. In this case, the manufacturer or the like of the communication equipment 100 requests the authority that issues legal certification to communication equipment to issue the legal certification with regard to the communication equipment 100 performing radio wave communication using the predetermined communication standard.

### (User terminal)

The user terminal 300 is a terminal used by the user 30. The user terminal 300 is, for example, a computer, a mobile information terminal or the like used by the user 30. The user terminal 300 receives various information from the management server 200 by communicating with the management server 200 via the network N1. The user terminal 300 may be a terminal mounted on the vehicle 10. In this case, the user terminal 300 may communicate with the management server 200 not via the network N1 but via the vehicle 10 through the in-vehicle network of the vehicle 10.

### (Management server)

The management server 200 is a server that manages legal certification with regard to various pieces of communication equipment performing radio wave communication. Fig. 2 is a sequence diagram illustrating a flow of information processing in the certification system 1. Fig. 2 illustrates a flow of information processing in the case where the communication equipment 100 has not been legally certificated with regard to performing radio wave communication using the predetermined communication standard.

As illustrated in Fig. 2, the vehicle 10 acquires position information about a current position of the vehicle 10 (S11). The vehicle 10 acquires the current position of the vehicle 10, for example, from a GPS sensor provided for the vehicle 10. The vehicle 10 transmits the acquired position information to the management server 200 via the network N1 (S12). Further, the vehicle 10 acquires equipment information which is information about the communication equipment 100 (S13). Here, the equipment information is information that includes an identifier for identifying the communication equipment 100 (an equipment ID) and a communication standard used when the communication equipment 100 performs radio wave communication. The vehicle 10 acquires the equipment information of the communication equipment 100 by accessing the communication equipment 100 via the in-vehicle network. Then, the vehicle 10 transmits the acquired equipment information to the management server 200 via the network N1 (S14).

The management server 200 executes the determination process based on the position information and equipment information received from the vehicle 10 (S15). The determination process is a process for determining whether or not the communication equipment 100 has acquired legal certification in an area where the vehicle 10 exists (which may be hereinafter referred to as "an existence area") with regard to performing radio wave communication using the predetermined communication standard has been acquired or not. Then, if the communication equipment 100 has not acquired the legal certification with regard to performing radio wave communication using the predetermined communication standard, the management server 200 transmits request information to request acquisition of the legal certification to the certification server 400 (S16). Further, the management server 200 transmits notification information to notify that the communication equipment 100 has not acquired the legal certification with regard to performing radio wave communication using the predetermined communication standard, to the user terminal 300 (S17). Details of the determination process executed by the management server 200 will be described later.

The management server 200 is configured including a computer that has a processor 210, a main storage 220, an auxiliary storage 230 and a communication interface (communication I/F) 240. The processor 210 is, for example, a CPU (central processing unit) or a DSP (digital signal processor). The main storage 220 is, for example, a RAM (random access memory). The auxiliary storage 230 is, for example, a ROM (read-only memory). The auxiliary storage 230 is, for example, an HDD (hard disk drive) or a disc recording medium like a CD-ROM, a DVD disc or a Blu-ray Disc. Further, the auxiliary storage 230 may be a removable medium (a portable storage medium). Here, as the removable medium, for example, a USB memory or an SD card is exemplified. The communication I/F 240 is, for example, a LAN (local area network) interface board or a wireless communication circuit for wireless communication.

In the management server 200, an operating system (OS), various kinds of programs, various kinds of information tables and the like are stored in the auxiliary storage 230. In the management server 200, various kinds of functions as described later can be realized by the processor 210 loading a program stored in the auxiliary storage 230 to the main storage 220 and executing the program. However, a part or all of the functions of the management server 200 may be realized by a hardware circuit like an ASIC or an FPGA. The management server 200 is not necessarily required to be realized by a single physical configuration but may be configured by a plurality of mutually cooperating computers. The management server 200 in the present embodiment corresponds to "an information processing apparatus" according to the present disclosure.

### (Functional configuration)

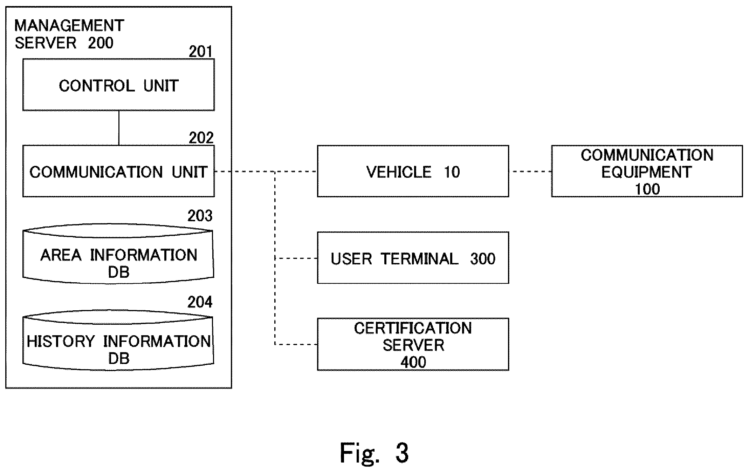

Next, a functional configuration of the management server 200 constituting the certification system 1 according to the present embodiment will be described based on Figs. 3 to 5. Fig. 3 is a block diagram schematically illustrating an example of the functional configuration of the management server 200.

The management server 200 is configured including a control unit 201, a communication unit 202, an area information database (area information DB) 203 and a history information database (history information DB) 204. The control unit 201 has a function of performing arithmetic processing for controlling the management server 200. The control unit 201 can be realized by the processor 210 of the management server 200. The communication unit 202 has a function of connecting the management server 200 to the network N1. The communication unit 202 can be realized by the communication I/F 240 of the management server 200.

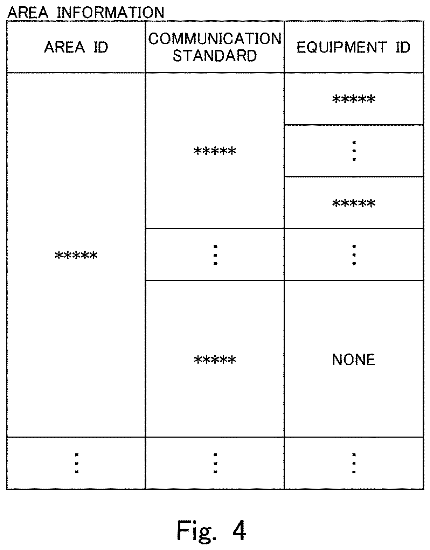

The area information DB 203 has a function of holding area information. Here, the area information is information about legal certification for communication equipment for each area. The area information DB 203 can be realized by the auxiliary storage 230 of the management server 200. Fig. 4 is a diagram illustrating an example of a table configuration of the area information held in the area information DB 203.

As illustrated in Fig. 4, the area information has area ID fields, communication standard fields and equipment ID fields. In each area ID field, an identifier for identifying an area (an area ID) is inputted. In each communication standard field, information for identifying a communication standard is inputted. In each communication standard field, for example, a name of a communication standard (a communication standard name or a band name) is inputted. In each equipment ID field, an equipment ID of communication equipment that is legally certified with regard to performing radio wave communication using a communication standard having a communication standard name inputted in a corresponding communication standard field in an area corresponding to an area ID inputted in a corresponding area ID field is inputted. Here, if there is no communication equipment that is legally certified with regard to performing radio wave communication using a communication standard having a communication standard name inputted in a communication standard field in an area corresponding to an area ID inputted in a corresponding area ID field, "none" is inputted in a corresponding equipment ID field as illustrated in Fig. 4. The control unit 201 can grasp pieces of communication equipment that are legally certified with regard to using each communication standard in each area by acquiring the area information from the area information DB 203.

The control unit 201 receives position information from the vehicle 10 by the communication unit 202. The control unit 201 identifies an existence area based on the received position information. Further, the control unit 201 receives equipment information from the vehicle 10 by the communication unit 202.

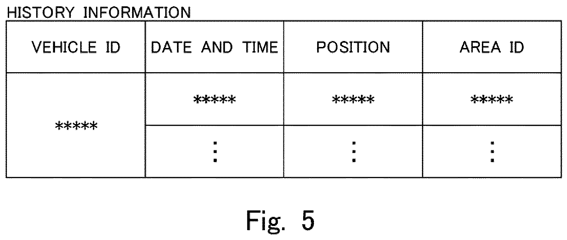

The history information DB 204 has a function of holding history information. The history information is information about areas where the vehicle 10 existed in the past. The history information DB 204 can be realized by the auxiliary storage 230 of the management server 200. Fig. 5 is a diagram illustrating an example of a table configuration of the history information held in the history information DB 204.

As illustrated in Fig. 5, the history information has a vehicle ID field, date and time fields, position fields and area ID fields. In the vehicle ID field, an identifier for identifying the vehicle 10 (a vehicle ID) is inputted. In each date and time field, information about a date and time when the vehicle 10 transmitted position information to the management server 200 (a transmission date and time) is inputted. In each position field, information about a position of the vehicle 10 included in position information is inputted. As the information about a position of the vehicle 10 inputted in the position field, for example, a longitude and a latitude of a position where the vehicle 10 exists is inputted. In each area ID field, an area ID of an area that includes a position of the vehicle 10 corresponding to information about a position of the vehicle 10 inputted in a corresponding position field is inputted.

The control unit 201 repeatedly receives position information from the vehicle 10 by the communication unit 202. The control unit 201 updates the history information based on the position information received from the vehicle 10. Specifically, based on information about a transmission date and time and a position of the vehicle 10 that are included in position information, the control unit 201 inputs the information about the transmission date and time and the information about the position of the vehicle 10 into a date and time field and a position field, respectively. Further, the control unit 201 inputs an area ID of an area corresponding to the information about the position of the vehicle 10 inputted in the position field into a corresponding area ID field.

It becomes possible for the control unit 201 to grasp areas where the vehicle 10 existed in the past by acquiring the history information from the history information DB 204. Thereby, when newly receiving position information from the vehicle 10, the control unit 201 can grasp whether the area where the vehicle 10 exists has changed or not. Specifically, the control unit 201 can grasp whether the area where the vehicle 10 exists has changed or not by whether the area ID in the history information has changed or not. Further, the control unit 201 can grasp a period for which the vehicle 10 has existed in the same area by acquiring the history information from the history information DB 204. Specifically, the control unit 201 calculates the period for which the vehicle 10 has existed in the same area, based on information about a transmission date and time inputted in a date and time field and an area ID inputted in a corresponding area ID field in the history information.

### (Determination process)

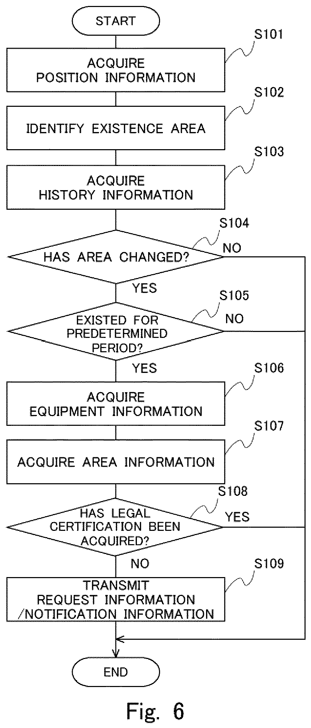

Next, description will be made on the determination process executed by the control unit 201 of the management server 200 in the certification system 1 according to the present embodiment, based on Fig. 6. The determination process is a process for determining whether it is necessary or not for the communication equipment 100 to newly acquire legal certification with regard to performing radio wave communication using the predetermined communication standard. Fig. 6 is a flowchart of the determination process. Execution of the determination process is started when the management server 200 receives position information from the vehicle 10.

In the determination process, position information received from the vehicle 10 is acquired at S101 first. Next, at S102, an existence area of the vehicle 10 is identified. At S103, history information is acquired from the history information DB 204. Then, at S104, it is determined whether the existence area of the vehicle 10 has changed or not based on the history information held in the history information DB 204. If a negative judgment is made at S104, it is not necessary for the communication equipment 100 to newly acquire legal certification with regard to performing radio wave communication using the predetermined communication standard. Therefore, if the negative judgment is made at S104, the determination process is ended once.

If a positive judgment is made at S104, it may be necessary for the communication equipment 100 to newly acquire legal certification with regard to performing radio wave communication using the predetermined communication standard. If the vehicle 10 exists in the existence area for a short time because of a trip or the like, it may not be required to newly acquire the legal certification with regard to the communication equipment 100 performing radio wave communication using the predetermined communication standard. Therefore, at S105, it is determined whether or not the vehicle 10 has existed in the existence area for a predetermined period or more based on the history information held in the history information DB 204. Here, the predetermined period is, for example, a period after which it is required to newly acquire the legal certification with regard to the communication equipment 100 performing radio wave communication using the predetermined communication standard in the existence area. By determining whether or not the vehicle 10 has existed in the existence area for the predetermined period or more at S105, it is prevented that the legal certification is newly acquired when it is not necessary to acquire the new legal certification with regard to the communication equipment 100 performing radio wave communication using the predetermined communication standard.

If a positive judgment is made at S105, equipment information received from the vehicle 10 is acquired at S106. At S107, area information is acquired from the area information DB 203. Next, at S108, it is determined whether or not the legal certification has been acquired with regard to the communication equipment 100 performing radio wave communication using the predetermined communication standard, based on the area information, an area ID of the existence area identified at S102 and the equipment information. Specifically, it is determined whether or not the legal certification has been acquired with regard to the communication equipment 100 performing radio wave communication using the predetermined communication standard, by checking whether association among the area ID of the existence area, the equipment ID of the communication equipment 100 included in the equipment information and the communication standard of the communication equipment 100 included in the equipment information is inputted in the area information. If a positive judgment is made at S108, it is not necessary to newly acquire the legal certification with regard to the communication equipment 100 performing radio wave communication using the predetermined communication standard. Therefore, the determination process is ended once.

If a negative judgment is made at S108, request information is transmitted to the certification server 400 at S109. Further, if the negative judgment is made at S108, notification information is transmitted to the user terminal 300 at S109. Then, the determination process is ended once.

As described above, according to the certification system 1, if legal certification has not been acquired with regard to the communication equipment 100 performing radio wave communication using the predetermined communication standard, request information is transmitted to the certification server 400. Thereby, it becomes possible for an administrator or the like of the certification server 400 to grasp that issuance of the legal certification has been applied for with regard to the communication equipment 100 performing radio wave communication using the predetermined communication standard. Then, issuance and the like of the legal certification with regard to the communication equipment 100 performing radio wave communication using the predetermined communication standard are performed by the administrator or the like of the certification server 400. As a result, it is prevented that the communication equipment 100 is into the state of not being legally certificated with regard to performing radio wave communication using the predetermined standard.

Further, according to the certification system 1, if the legal certification has not been acquired with regard to the communication equipment 100 performing radio wave communication using the predetermined communication standard, notification information is transmitted to the user terminal 300. Thereby, it becomes possible for the user 30 to recognize that the communication equipment 100 is in the state of not being legally certified with regard to performing radio wave communication using the predetermined standard. Then, it is prevented that the communication equipment 100 is used by the user 30. As a result, it is prevented that the communication equipment 100 is into the state of not being legally certificated with regard to performing radio wave communication using the predetermined standard.

### (Modification)

In the present embodiment, the management server 200 performs management about legal certification with regard to the communication equipment 100 performing radio wave communication using the predetermined communication standard. However, in addition to communication equipment that performs radio wave communication, the management server 200 may perform management about legal certification with regard to radio wave equipment that performs transmission/reception of radio waves, such as a millimeter wave radar, performing transmission/reception of radio waves.

### <Second embodiment>

In the present embodiment, after the management server 200 transmits request information to the certification server 400, the management server 200 receives a result about whether issuance of legal certification with regard to the communication equipment 100 performing radio wave communication using the predetermined communication standard is possible or not, from the certification server 400. Hereinafter, only a point different from the first embodiment will be described.

The control unit 201 receives result information from the certification server 400 by the communication unit 202. The result information is information about whether issuance of the legal certification with regard to the communication equipment 100 performing radio wave communication using the predetermined communication standard is possible or not. Here, after the administrator or the like of the certification server 400 decides whether issuance of the legal certification with regard to the communication equipment 100 performing radio wave communication using the predetermined communication standard is possible or not, the result information is transmitted to the management server 200 via the certification server 400. Therefore, the result information is transmitted to the management server 200 after a period from when the management server 200 transmits request information until when it is decided whether issuance of the legal certification with regard to the communication equipment 100 performing radio wave communication using the predetermined communication standard is possible or not elapses.

The control unit 201 determines whether issuance of the legal certification with regard to the communication equipment 100 performing radio wave communication using the predetermined communication standard is possible or not, based on the result information. Then, if it is possible to issue the legal certification with regard to the communication equipment 100 performing radio wave communication using the predetermined communication standard, the control unit 201 updates the area information held in the area information DB 203. Specifically, the control unit 201 adds the equipment ID of the communication equipment 100 into an equipment ID field corresponding to an area ID field corresponding to the existence area and a communication standard field corresponding to the communication standard of the communication equipment 100. If data for at least one of an area ID field corresponding to the existence area and a communication standard field corresponding to the communication standard of the communication equipment 100 is not inputted, the control unit 201 newly adds the data and adds the equipment ID.

Further, if it is possible to issue the legal certification with regard to the communication equipment 100 performing radio wave communication using the predetermined communication standard, the control unit 201 transmits certification information to the vehicle 10. Here, the certification information is information showing that the communication equipment 100 is communication equipment for which the legal certification with regard to performing radio wave communication using the predetermined communication standard has been acquired. The certification information is transmitted from the management server 200 to the vehicle 10 by the management server 200 receiving the certification information from the certification server 400. When receiving the certification information from the management server 200, the vehicle 10 transfers the certification information to the communication equipment 100 via the in-vehicle network. Thereby, it becomes possible for the communication equipment 100 to hold the certification information.

If it is impossible to issue the legal certification with regard to the communication equipment 100 performing radio wave communication using the predetermined communication standard, the control unit 201 transmits guidance information to the user terminal 300. The guidance information is information notifying that issuance of the legal certification with regard to the communication equipment 100 performing radio wave communication using the predetermined communication standard is impossible. Further, the guidance information includes information that guides the user 30 to stop the communication equipment 100 from performing radio wave communication using the predetermined communication standard. Specifically, the guidance information includes information that guides settings for the communication equipment 100 in order to cause the communication equipment 100 to stop radio wave communication using the predetermined communication standard. Further, the guidance information may include information about guidance for causing the communication equipment 100 to stop radio wave communication using the predetermined communication standard in the vehicle 10 by removing the communication equipment 100 or exchanging the communication equipment 100 with new communication equipment that has acquired legal certification.

### (Transmission process)

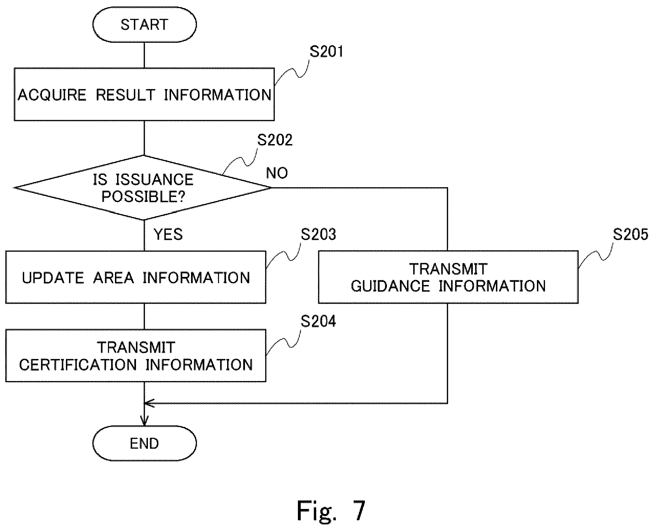

Next, a transmission process executed by the control unit 201 of the management server 200 in the certification system 1 of the present embodiment will be described based on Fig. 7. The transmission process is a process for transmitting information to the vehicle 10 or the user terminal 300 based on result information. Fig. 7 is a flowchart of the transmission process. Execution of the transmission process is started when the management server 200 receives result information from the certification server 400.

In the transmission process, result information received from the certification server 400 is acquired at S201 first. Next, at S202, it is determined whether issuance of legal certification with regard to the communication equipment 100 performing radio wave communication using the predetermined communication standard is possible or not, based on the result information. If a positive judgment is made at S202, the area information held in the area information DB 203 is updated at S203. Thereby, the management server 200 can grasp that the legal certification with regard to the communication equipment 100 performing radio wave communication using the predetermined communication standard has been newly issued. Further, at S204, certification information is transmitted to the vehicle 10. Then, the transmission process is ended. If a negative judgment is made at S202, guidance information is transmitted to the user terminal 300. Then, the transmission process is ended.

As described above, according to the certification system 1 in the present embodiment, guidance information is transmitted to the user terminal 300. Thereby, the communication equipment 100 is prevented from performing radio wave communication using the predetermined communication standard, by the user 30. As a result, it becomes possible to prevent the communication equipment 100 from being into the state of not being legally certificated with regard to performing radio wave communication using the predetermined communication standard.

### <Other embodiments>

The above embodiments are mere examples, and the present disclosure can be appropriately changed and implemented within the scope of the claims. Further, the processes and means described in the present disclosure can be freely combined and implemented as far as technological contradiction does not occur.

Further, a process described as being performed by one apparatus may be shared and executed by a plurality of apparatuses. Or alternatively, processes described as being performed by different apparatuses may be executed by one apparatus. In a computer system, by what hardware configuration (server configuration) each function is realized can be flexibly changed.

The present disclosure can be realized by supplying a computer program in which the functions described in the above embodiments are implemented to a computer, and one or more processors that the computer has reading out and executing the program. Such a computer program may be provided for the computer by a non-transitory computer-readable storage medium connectable to a system bus of the computer or may be provided for the computer via a network. As the non-transitory computer-readable storage medium, for example, a disk of an arbitrary type such as a magnetic disk (a floppy (registered trademark) disk, a hard disk drive (HDD) or the like), an optical disc (a CD-ROM, a DVD disc, a Blu-ray disc or the like), a read-only memory (ROM), a random-access memory (RAM), an EPROM, an EEPROM, a magnetic card, a flash memory, or a medium of an arbitrary type that is appropriate for storing electronic commands like an optical card.

### Reference Signs List

- 1: certification system
- 10: vehicle
- 100: communication equipment
- 200: management server
- 201: control unit
- 202: communication unit
- 203: area information DB
- 204: history information DB
- 30: user
- 300: user terminal
- 400: certification server

## Claims

1. An information processing apparatus (200) comprising a control unit (201), the control unit (201) being configured to execute:
identifying (S101,S102) an area where a vehicle (10) is located based on position information about the vehicle (10) acquired from a GPS sensor provided in the vehicle (10);
performing a predetermined determination process (S108) for determining whether or not legal certification in the identified area has been acquired with regard to radio wave equipment (100) mounted on the vehicle (10) performing transmission/reception of radio waves using a predetermined standard; and
transmitting (S109) first information related to the legal certification to an external apparatus (300, 400) if the legal certification has not been acquired with regard to the radio wave equipment (100) performing transmission/reception of radio waves using the predetermined standard, **characterized in that**
the control unit (201) is configured to determine in the predetermined determination process (S108) whether legal certification in the predetermined area has been acquired or not, if the control unit (201) determines (S105), based on a history of the position information acquired from the GPS sensor, that the vehicle (10) is located in a predetermined area for a predetermined period or more, the predetermined period being a period after which it is required to newly acquire the legal certification with regard to the communication equipment (100),
the first information includes information for requesting issuance of the legal certification in the area with regard to the radio wave equipment (100) performing transmission/reception of radio waves using the predetermined standard; and
the external apparatus(300, 400) includes a predetermined server apparatus related to the legal certification.

2. The information processing apparatus (200) according to claim 1, comprising a storage (203) storing second information which is information about legal certification for pieces of radio wave equipment for each area; wherein
the control unit (201) further executes receiving the position information about the vehicle (10) and third information, which is information identifying the radio wave equipment (100), from the vehicle (10) to perform the predetermined determination process based on the second information, information about the identified area and the third information.

3. The information processing apparatus (200) according to claim 1 or 2, wherein
if it is notified from the predetermined server apparatus that issuance of the legal certification is impossible, the control unit (201) makes a notification including that issuance of the legal certification with regard to the radio wave equipment (100) performing transmission/reception of radio waves using the predetermined standard is impossible, to a user (30) of the vehicle (10).

4. The information processing apparatus (200) according to claim 3, wherein the control unit (201) makes the notification further including guidance for the radio wave equipment (100) to stop performing transmission/reception of radio waves using the predetermined standard, to the user (30) of the vehicle (10).

5. The information processing apparatus (200) according to any one of claims 1 to 4, wherein
if the legal certification is newly issued to the radio wave equipment (100), the control unit (201) transmits certification information showing that acquisition of the legal certification has been performed, to the radio wave equipment (100).

6. The information processing apparatus (200) according to any one of claims 1 to 5, wherein
the first information includes information for notifying that the legal certification has not been acquired with regard to the radio wave equipment (100) performing transmission/reception of radio waves using the predetermined standard; and
the external apparatus (300) includes a terminal related to a user (30) of the vehicle (10).

7. The information processing apparatus (200) according to any one of claims 1 to 6, wherein
if the area where the vehicle (10) is located changes, the control unit (201) performs the predetermined determination process.

8. An information processing method executed by a computer (200), the information processing method comprising:
identifying (S101,S102) an area where a vehicle (10) is located based on position information about the vehicle (10) acquired from a GPS sensor provided in the vehicle (10);
performing a predetermined determination process (S108) for determining whether or not legal certification in the identified area has been acquired with regard to radio wave equipment (100) mounted on the vehicle (10) performing transmission/reception of radio waves using a predetermined standard; and
transmitting (S109) first information related to the legal certification to an external apparatus (300, 400) if the legal certification has not been acquired with regard to the radio wave equipment (100) performing transmission/reception of radio waves using the predetermined standard, **characterized in that**
it is determined in the predetermined determination process (S108) whether legal certification in the predetermined area has been acquired or not, if it is determined (S105), based on a history of the position information acquired from the GPS sensor, that the vehicle (10) is located in a predetermined area for a predetermined period or more, the predetermined period being a period after which it is required to newly acquire the legal certification with regard to the communication equipment (100),
the first information includes information for requesting issuance of the legal certification in the area with regard to the radio wave equipment (100) performing transmission/reception of radio waves using the predetermined standard; and
the external apparatus (300, 400) includes a predetermined server apparatus related to the legal certification.

9. The information processing method according to claim 8, wherein
the computer (200) comprises a storage (203) storing second information which is information about legal certification for pieces of radio wave equipment for each area; and
the information processing method further comprises receiving the position information about the vehicle (10) and third information, which is information identifying the radio wave equipment (100), from the vehicle (10) to perform the predetermined determination process based on the second information, the identified information about the area and the third information.

10. The information processing method according to claim 8 or 9, further comprising making a notification including that issuance of the legal certification with regard to the radio wave equipment (100) performing transmission/reception of radio waves using the predetermined standard is impossible, to a user (30) of the vehicle (10) if it is notified from the predetermined server apparatus that issuance of the legal certification is impossible.

11. The information processing method according to claim 10, wherein
the notification further including guidance for the radio wave equipment (100) to stop performing transmission/reception of radio waves using the predetermined standard is made to the user (30) of the vehicle (10).

12. The information processing method according to any one of claims 8 to 11, wherein
if the legal certification is newly issued to the radio wave equipment (100), certificate information showing that acquisition of the legal certification has been performed is transmitted to the radio wave equipment (100).

13. The information processing method according to any one of claims 8 to 12, wherein
the first information includes information for notifying that the legal certification has not been acquired with regard to the radio wave equipment (100) performing transmission/reception of radio waves using the predetermined standard; and
the external apparatus (300) includes a terminal related to a user (30) of the vehicle (10).

14. The information processing method according to any one of claims 8 to 13, wherein
if the area where the vehicle (10) is located changes, the predetermined determination process is performed.

15. A program for causing a computer (200) to execute an information processing method, wherein
the information processing method comprises:
identifying (S101,S102) an area where a vehicle (10) is located based on position information about the vehicle (10);
performing a predetermined determination process (S108) for determining whether or not legal certification in the identified area has been acquired with regard to radio wave equipment (100) mounted on the vehicle (10) performing transmission/reception of radio waves using a predetermined standard; and
transmitting (S109) first information related to the legal certification to an external apparatus (300, 400) if the legal certification has not been acquired with regard to the radio wave equipment (100) performing transmission/reception of radio waves using the predetermined standard, wherein
it is determined in the predetermined determination process (S108) whether legal certification in the predetermined area has been acquired or not, if it is determined (S105), based on a history of the position information acquired from the GPS sensor, that the vehicle (10) is located in a predetermined area for a predetermined period or more, the predetermined period being a period after which it is required to newly acquire the legal certification with regard to the communication equipment (100),
the first information includes information for requesting issuance of the legal certification in the area with regard to the radio wave equipment (100) performing transmission/reception of radio waves using the predetermined standard; and
the external apparatus (300, 400) includes a predetermined server apparatus related to the legal certification.

16. The program according to claim 15, wherein
the computer (200) comprises a storage (203) storing second information which is information about legal certification for pieces of radio wave equipment for each area; and
the information processing method further comprises receiving the position information about the vehicle (10) and third information, which is information identifying the radio wave equipment (100), from the vehicle (10) to perform the predetermined determination process based on the second information, the identified information about the area and the third information.

## Patentansprüche

1. Informationsverarbeitungsvorrichtung (200), umfassend eine Steuereinheit (201), wobei die Steuereinheit (201) konfiguriert ist, um Folgendes auszuführen:
Identifizieren (S101, S102) eines Gebiets, in dem sich ein Fahrzeug (10) befindet, basierend auf Positionsinformationen über das Fahrzeug (10), die von einem in dem Fahrzeug (10) bereitgestellten GPS-Sensor erfasst werden;
Durchführen eines vorbestimmten Bestimmungsvorgangs (S108) zum Bestimmen, ob eine legale Zertifizierung in dem identifizierten Gebiet in Bezug auf die an dem Fahrzeug (10) montierte Funkwellenausrüstung (100), die ein Übertragen/Empfangen von Funkwellen durchführt, unter Verwendung eines vorbestimmten Standards erworben wurde; und
Übertragen (S109) von ersten Informationen in Bezug auf die gesetzliche Zertifizierung an eine externe Vorrichtung (300, 400), wenn die gesetzliche Zertifizierung in Bezug auf die Funkwellenausrüstung (100), die das Übertragen/Empfangen von Funkwellen unter Verwendung des vorbestimmten Standards durchführt, nicht erworben wurde, **dadurch gekennzeichnet, dass**
die Steuereinheit (201) konfiguriert ist, um in dem vorbestimmten Bestimmungsvorgang (S108) zu bestimmen, ob eine legale Zertifizierung in dem vorbestimmten Gebiet erworben wurde, wenn die Steuereinheit (201) basierend auf einer Historie der von dem GPS-Sensor erworbenen Positionsinformationen bestimmt (S105), dass sich das Fahrzeug (10) für eine vorbestimmte Periode oder mehr in einem vorbestimmten Gebiet befindet, die vorbestimmte Periode eine Periode ist, nach der es erforderlich ist, die gesetzliche Zertifizierung in Bezug auf die Kommunikationsausrüstung (100) neu zu erwerben,
die ersten Informationen Informationen zum Beantragen einer Ausstellung der gesetzlichen Zertifizierung in dem Gebiet in Bezug auf die Funkwellenausrüstung (100) beinhalten, die ein Übertragen/Empfangen von Funkwellen unter Verwendung des vorbestimmten Standards durchführt; und
die externe Vorrichtung (300, 400) eine vorbestimmte Server-Vorrichtung in Bezug auf die gesetzliche Zertifizierung beinhaltet.

2. Informationsverarbeitungsvorrichtung (200) nach Anspruch 1, umfassend einen Speicher (203), der zweite Informationen speichert, die Informationen über die gesetzliche Zertifizierung von Funkwellenausrüstung für jedes Gebiet sind; wobei
die Steuereinheit (201) ferner ein Empfangen der Positionsinformationen über das Fahrzeug (10) und dritter Informationen, die Informationen zur Identifizierung der Funkwellenausrüstung (100) sind, von dem Fahrzeug (10) ausführt, um den vorbestimmten Bestimmungsvorgang basierend auf den zweiten Informationen, den Informationen über das identifizierte Gebiet und den dritten Informationen durchzuführen.

3. Informationsverarbeitungsvorrichtung (200) nach Anspruch 1 oder 2, wobei
wenn von der vorbestimmten Server-Vorrichtung mitgeteilt wird, dass die Ausstellung der gesetzlichen Zertifizierung unmöglich ist, die Steuereinheit (201) eine Mitteilung an einen Benutzer (30) des Fahrzeugs (10) macht, die beinhaltet, dass eine Ausstellung der gesetzlichen Zertifizierung in Bezug auf die Funkwellenausrüstung (100), die das Übertragen/Empfangen von Funkwellen unter Verwendung des vorbestimmten Standards durchführt, unmöglich ist.

4. Informationsverarbeitungsvorrichtung (200) nach Anspruch 3, wobei die Steuereinheit (201) die Benachrichtigung an den Benutzer (30) des Fahrzeugs (10) vornimmt, die ferner eine Anweisung an die Funkwellenausrüstung (100) beinhaltet, das Übertragen/Empfangen von Funkwellen unter Verwendung des vorbestimmten Standards zu beenden.

5. Informationsverarbeitungsvorrichtung (200) nach einem der Ansprüche 1 bis 4, wobei
wenn die gesetzliche Zertifizierung für die Funkwellenausrüstung (100) neu ausgestellt wird, die Steuereinheit (201) Zertifizierungsinformationen an die Funkwellenausrüstung (100) überträgt, die zeigen, dass der Erwerb der gesetzlichen Zertifizierung durchgeführt worden ist.

6. Informationsverarbeitungsvorrichtung (200) nach einem der Ansprüche 1 bis 5, wobei
die ersten Informationen Informationen beinhalten, um mitzuteilen, dass die gesetzliche Zertifizierung in Bezug auf die Funkwellenausrüstung (100), die das Übertragen/Empfangen von Funkwellen unter Verwendung des vorbestimmten Standards durchführt, nicht erworben wurde; und
die externe Vorrichtung (300) ein Endgerät beinhaltet, das mit einem Benutzer (30) des Fahrzeugs (10) in Verbindung ist.

7. Informationsverarbeitungsvorrichtung (200) nach einem der Ansprüche 1 bis 6, wobei
wenn sich das Gebiet, in dem sich das Fahrzeug (10) befindet, ändert, die Steuereinheit (201) den vorbestimmten Bestimmungsvorgang durchführt.

8. Informationsverarbeitungsverfahren, das von einem Computer (200) ausgeführt wird, das Informationsverarbeitungsverfahren umfassend:
Identifizieren (S101, S102) eines Gebiets, in dem sich ein Fahrzeug (10) befindet, basierend auf Positionsinformationen über das Fahrzeug (10), die von einem in dem Fahrzeug (10) bereitgestellten GPS-Sensor erfasst werden;
Durchführen eines vorbestimmten Bestimmungsvorgangs (S108) zum Bestimmen, ob eine legale Zertifizierung in dem identifizierten Gebiet in Bezug auf die an dem Fahrzeug (10) montierte Funkwellenausrüstung (100), die ein Übertragen/Empfangen von Funkwellen durchführt, unter Verwendung eines vorbestimmten Standards erworben wurde; und
Übertragen (S109) von ersten Informationen in Bezug auf die gesetzliche Zertifizierung an eine externe Vorrichtung (300, 400), wenn die gesetzliche Zertifizierung in Bezug auf die Funkwellenausrüstung (100), die das Übertragen/Empfangen von Funkwellen unter Verwendung des vorbestimmten Standards durchführt, nicht erworben wurde, **dadurch gekennzeichnet, dass**
in dem vorbestimmten Bestimmungsvorgang (S108) bestimmt wird, ob eine gesetzliche Zertifizierung in dem vorbestimmten Gebiet erworben wurde, wenn basierend auf einer Historie der von dem GPS-Sensor erfassten Positionsinformationen bestimmt wird (S105), dass sich das Fahrzeug (10) für eine vorbestimmte Periode oder mehr in einem vorbestimmten Gebiet befindet, wobei die vorbestimmte Periode eine Periode ist, nach der es erforderlich ist, die gesetzliche Zertifizierung in Bezug auf die Kommunikationsausrüstung (100) neu zu erwerben,
die ersten Informationen Informationen zum Beantragen einer Ausstellung der gesetzlichen Zertifizierung in dem Gebiet in Bezug auf die Funkwellenausrüstung (100) beinhalten, die ein Übertragen/Empfangen von Funkwellen unter Verwendung des vorbestimmten Standards durchführt; und
die externe Vorrichtung (300, 400) eine vorbestimmte Server-Vorrichtung in Bezug auf die gesetzliche Zertifizierung beinhaltet.

9. Informationsverarbeitungsverfahren nach Anspruch 8, wobei
der Computer (200) einen Speicher (203) umfasst, der zweite Informationen speichert, die Informationen über die gesetzliche Zertifizierung von Funkwellenausrüstung für jedes Gebiet sind; und
das Informationsverarbeitungsverfahren ferner ein Empfangen der Positionsinformationen über das Fahrzeug (10) und dritter Informationen, die Informationen zur Identifizierung der Funkwellenausrüstung (100) sind, von dem Fahrzeug (10) umfasst, um den vorbestimmten Bestimmungsvorgang basierend auf den zweiten Informationen, den identifizierten Informationen über das Gebiet und den dritten Informationen durchzuführen.

10. Informationsverarbeitungsverfahren nach Anspruch 8 oder 9, ferner umfassend ein Machen einer Mitteilung an einen Benutzer (30) des Fahrzeugs (10), dass eine Ausstellung der gesetzlichen Zertifizierung in Bezug auf die Funkwellenausrüstung (100), die das Übertragen/Empfangen von Funkwellen unter Verwendung des vorbestimmten Standards durchführt, unmöglich ist, wenn von der vorbestimmten Server-Vorrichtung mitgeteilt wird, dass die Ausstellung der gesetzlichen Zertifizierung unmöglich ist.

11. Informationsverarbeitungsverfahren nach Anspruch 10, wobei
die Mitteilung an den Benutzer (30) des Fahrzeugs (10) ferner eine Anweisung an die Funkwellenausrüstung (100) beinhaltet, das Übertragen/Empfangen von Funkwellen unter Verwendung des vorbestimmten Standards zu beenden.

12. Informationsverarbeitungsverfahren nach einem der Ansprüche 8 bis 11, wobei
wenn die gesetzliche Zertifizierung für die Funkwellenausrüstung (100) neu ausgestellt wird, Zertifizierungsinformationen, die zeigen, dass der Erwerb der gesetzlichen Zertifizierung durchgeführt wurde, an die Funkwellenausrüstung (100) übertragen werden.

13. Informationsverarbeitungsverfahren nach einem der Ansprüche 8 bis 12, wobei
die ersten Informationen Informationen beinhalten, um mitzuteilen, dass die gesetzliche Zertifizierung in Bezug auf die Funkwellenausrüstung (100), die das Übertragen/Empfangen von Funkwellen unter Verwendung des vorbestimmten Standards durchführt, nicht erworben wurde; und
die externe Vorrichtung (300) ein Endgerät beinhaltet, das mit einem Benutzer (30) des Fahrzeugs (10) in Verbindung ist.

14. Informationsverarbeitungsverfahren nach einem der Ansprüche 8 bis 13, wobei
wenn sich das Gebiet, in dem sich das Fahrzeug (10) befindet, ändert, der vorbestimmte Bestimmungsvorgang durchgeführt wird.

15. Programm, um einen Computer (200) zu veranlassen, ein Informationsverarbeitungsverfahren auszuführen, wobei
das Informationsverarbeitungsverfahren Folgendes umfasst: Identifizieren (S101, S102) eines Gebiets, in dem sich ein Fahrzeug (10) befindet, basierend auf Positionsinformationen über das Fahrzeug (10);
Durchführen eines vorbestimmten Bestimmungsvorgangs (S108) zum Bestimmen, ob eine legale Zertifizierung in dem identifizierten Gebiet in Bezug auf die an dem Fahrzeug (10) montierte Funkwellenausrüstung (100), die ein Übertragen/Empfangen von Funkwellen durchführt, unter Verwendung eines vorbestimmten Standards erworben wurde; und
Übertragen (S109) von ersten Informationen in Bezug auf die gesetzliche Zertifizierung an eine externe Vorrichtung (300, 400), wenn die gesetzliche Zertifizierung in Bezug auf die Funkwellenausrüstung (100), die das Übertragen/Empfangen von Funkwellen unter Verwendung des vorbestimmten Standards durchführt, nicht erworben wurde, wobei
in dem vorbestimmten Bestimmungsvorgang (S108) bestimmt wird, ob eine gesetzliche Zertifizierung in dem vorbestimmten Gebiet erworben wurde, wenn basierend auf einer Historie der von dem GPS-Sensor erfassten Positionsinformationen bestimmt wird (S105), dass sich das Fahrzeug (10) für eine vorbestimmte Periode oder mehr in einem vorbestimmten Gebiet befindet, wobei die vorbestimmte Periode eine Periode ist, nach der es erforderlich ist, die gesetzliche Zertifizierung in Bezug auf die Kommunikationsausrüstung (100) neu zu erwerben,
die ersten Informationen Informationen zum Beantragen einer Ausstellung der gesetzlichen Zertifizierung in dem Gebiet in Bezug auf die Funkwellenausrüstung (100) beinhalten, die ein Übertragen/Empfangen von Funkwellen unter Verwendung des vorbestimmten Standards durchführt; und
die externe Vorrichtung (300, 400) eine vorbestimmte Server-Vorrichtung in Bezug auf die gesetzliche Zertifizierung beinhaltet.

16. Programm nach Anspruch 15, wobei
der Computer (200) einen Speicher (203) umfasst, der zweite Informationen speichert, die Informationen über die gesetzliche Zertifizierung von Funkwellenausrüstung für jedes Gebiet sind; und
das Informationsverarbeitungsverfahren ferner ein Empfangen der Positionsinformationen über das Fahrzeug (10) und dritter Informationen, die Informationen zur Identifizierung der Funkwellenausrüstung (100) sind, von dem Fahrzeug (10) umfasst, um den vorbestimmten Bestimmungsvorgang basierend auf den zweiten Informationen, den identifizierten Informationen über das Gebiet und den dritten Informationen durchzuführen.

## Revendications

1. Appareil de traitement de l'information (200) comprenant une unité de commande (201), l'unité de commande (201) étant configurée pour exécuter :
l'identification (S101, S102) d'une zone où un véhicule (10) se trouve sur la base d'une information de position concernant le véhicule (10) acquise à partir d'un capteur de GPS prévu dans le véhicule (10) ;
la réalisation d'un processus de détermination prédéterminé (S108) pour déterminer si une certification légale dans la zone identifiée a été acquise ou non en ce qui concerne un équipement d'onde radio (100) monté dans le véhicule (10) qui réalise une émission/réception d'ondes radio en utilisant une norme prédéterminée ; et
l'émission (S109) d'une première information liée à la certification légale vers un appareil externe (300, 400) si la certification légale n'a pas été acquise en ce qui concerne l'équipement d'onde radio (100) qui réalise une émission/réception d'ondes radio en utilisant la norme prédéterminée, **caractérisé en ce que**
l'unité de commande (201) est configurée pour déterminer dans le processus de détermination prédéterminé (S108) si une certification légale dans la zone prédéterminée a été acquise ou pas, si l'unité de commande (201) détermine (S105), sur la base d'un historique de l'information de position acquise à partir du capteur de GPS, que le véhicule (10) se trouve dans une zone prédéterminée pendant une période prédéterminée ou plus, la période prédéterminée étant une période après laquelle il est exigé d'acquérir à nouveau la certification légale en ce qui concerne le matériel de communication (100),
la première information comprend de l'information pour demander l'établissement de la certification légale dans la zone en ce qui concerne l'équipement d'onde radio (100) qui réalise une émission/réception d'ondes radio en utilisant la norme prédéterminée ; et
l'appareil externe (300, 400) comprend un serveur prédéterminé lié à la certification légale.

2. Appareil de traitement de l'information (200) selon la revendication 1, comprenant un stockage (203) qui stocke une deuxième information qui est de l'information concernant la certification légale pour des parties d'équipement d'onde radio pour chaque zone ; dans lequel
l'unité de commande (201) exécute en outre une réception de l'information de position sur le véhicule (10) et d'une troisième information, qui est de l'information identifiant l'équipement d'onde radio (100), provenant du véhicule (10) pour réaliser le processus de détermination prédéterminé sur la base de la deuxième information, de l'information sur la zone identifiée et de la troisième information.

3. Appareil de traitement de l'information (200) selon la revendication 1 ou 2, dans lequel
s'il est notifié par le serveur prédéterminé qu'un établissement de la certification légale est impossible, l'unité de commande (201) réalise pour un utilisateur (30) du véhicule (10) une notification sur le fait qu'un établissement de la certification légale en ce qui concerne l'équipement d'onde radio (100) qui réalise une émission/réception d'ondes radio en utilisant la norme prédéterminée est impossible.

4. Appareil de traitement de l'information (200) selon la revendication 3, dans lequel l'unité de commande (201) réalise pour l'utilisateur (30) du véhicule (10) la notification comprenant en outre des conseils pour que l'équipement d'onde radio (100) cesse de réaliser une émission/réception d'ondes radio en utilisant la norme prédéterminée.

5. Appareil de traitement de l'information (200) selon l'une quelconque des revendications 1 à 4, dans lequel
si la certification légale est nouvellement délivrée à l'équipement d'onde radio (100), l'unité de commande (201) transmet à l'équipement d'onde radio (100) de l'information de certification montrant qu'une acquisition de la certification légale a été réalisée.

6. Appareil de traitement de l'information (200) selon l'une quelconque des revendications 1 à 5, dans lequel
la première information comprend de l'information pour notifier que la certification légale n'a pas été acquise en ce qui concerne l'équipement d'onde radio (100) qui réalise une émission/réception d'ondes radio en utilisant la norme prédéterminée ; et
l'appareil externe (300) comprend un terminal lié à un utilisateur (30) du véhicule (10).

7. Appareil de traitement de l'information (200) selon l'une quelconque des revendications 1 à 6, dans lequel
si la zone où le véhicule (10) se trouve change, l'unité de commande (201) réalise le processus de détermination prédéterminé.

8. Procédé de traitement de l'information exécuté par un ordinateur (200), le procédé de traitement de l'information comprenant :
l'identification (S101, S102) d'une zone où un véhicule (10) se trouve sur la base d'une information de position concernant le véhicule (10) acquise à partir d'un capteur de GPS prévu dans le véhicule (10) ;
la réalisation d'un processus de détermination prédéterminé (S108) pour déterminer si une certification légale dans la zone identifiée a été acquise ou non en ce qui concerne l'équipement d'onde radio (100) monté dans le véhicule (10) qui réalise une émission/réception d'ondes radio en utilisant une norme prédéterminée ; et
l'émission (S109) d'une première information liée à la certification légale vers un appareil externe (300, 400) si la certification légale n'a pas été acquise en ce qui concerne l'équipement d'onde radio (100) qui réalise une émission/réception d'ondes radio en utilisant la norme prédéterminée, **caractérisé en ce que**
on détermine dans le processus de détermination prédéterminé (S108) si une certification légale dans la zone prédéterminée a été acquise ou non, si l'on détermine (S105), sur la base d'un historique de l'information de position acquise à partir du capteur de GPS, que le véhicule (10) se trouve dans une zone prédéterminée pendant une période prédéterminée ou plus, la période prédéterminée étant une période après laquelle il est exigé d'acquérir à nouveau la certification légale en ce qui concerne le matériel de communication (100),
la première information comprend de l'information pour demander l'établissement de la certification légale dans la zone en ce qui concerne l'équipement d'onde radio (100) qui réalise une émission/réception d'ondes radio en utilisant la norme prédéterminée ; et
l'appareil externe (300, 400) comprend un serveur prédéterminé lié à la certification légale.

9. Procédé de traitement de l'information selon la revendication 8, selon lequel
l'ordinateur (200) comprend un stockage (203) qui stocke une deuxième information qui est de l'information sur la certification légale pour des parties d'équipement d'onde radio pour chaque zone ; et
le procédé de traitement de l'information comprend en outre la réception de l'information de position sur le véhicule (10) et d'une troisième information, qui est de l'information identifiant l'équipement d'onde radio (100), provenant du véhicule (10) pour réaliser le processus de détermination prédéterminé sur la base de la deuxième information, de l'information identifiée sur la zone et de la troisième information.

10. Procédé de traitement de l'information selon la revendication 8 ou 9, comprenant en outre la réalisation d'une notification comprenant le fait que l'établissement de la certification légale en ce qui concerne l'équipement d'onde radio (100) qui réalise une émission/réception d'ondes radio en utilisant la norme prédéterminée est impossible, pour un utilisateur (30) du véhicule (10) s'il est notifié par le serveur prédéterminé que l'établissement de la certification légale est impossible.

11. Procédé de traitement de l'information selon la revendication 10, selon lequel
la notification comprenant en outre des conseils pour que l'équipement d'onde radio (100) cesse de réaliser une émission/réception d'ondes radio en utilisant la norme prédéterminée est faite à l'utilisateur (30) du véhicule (10).

12. Procédé de traitement de l'information selon l'une quelconque des revendications 8 à 11, selon lequel
si la certification légale est nouvellement délivrée à l'équipement d'onde radio (100), de l'information de certificat montrant qu'une acquisition de la certification légale a été réalisée est transmise à l'équipement d'onde radio (100).

13. Procédé de traitement de l'information selon l'une quelconque des revendications 8 à 12, selon lequel
la première information comprend de l'information pour notifier que la certification légale n'a pas été acquise en ce qui concerne l'équipement d'onde radio (100) qui réalise une émission/réception d'ondes radio en utilisant la norme prédéterminée ; et
l'appareil externe (300) comprend un terminal lié à un utilisateur (30) du véhicule (10).

14. Procédé de traitement de l'information selon l'une quelconque des revendications 8 à 13, selon lequel
si la zone où le véhicule (10) se trouve change, le processus de détermination prédéterminé est réalisé.

15. Programme pour amener un ordinateur (200) à exécuter un procédé de traitement de l'information, dans lequel
le procédé de traitement de l'information comprend :
l'identification (S101, S102) d'une zone où un véhicule (10) se trouve sur la base d'une information de position concernant le véhicule (10) ;
la réalisation d'un processus de détermination prédéterminé (S108) pour déterminer si la certification légale dans la zone identifiée a été acquise ou non en ce qui concerne l'équipement d'onde radio (100) monté dans le véhicule (10) qui réalise une émission/réception d'ondes radio en utilisant une norme prédéterminée ; et
l'émission (S109) d'une première information liée à la certification légale vers un appareil externe (300, 400) si la certification légale n'a pas été acquise en ce qui concerne l'équipement d'onde radio (100) qui réalise une émission/réception d'ondes radio en utilisant la norme prédéterminée, dans lequel
on détermine dans le processus de détermination prédéterminé (S108) si une certification légale dans la zone prédéterminée a été acquise ou non, si l'on détermine (S105), sur la base d'un historique de l'information de position acquise à partir du capteur de GPS, que le véhicule (10) se trouve dans une zone prédéterminée pendant une période prédéterminée ou plus, la période prédéterminée étant une période après laquelle il est exigé d'acquérir à nouveau la certification légale en ce qui concerne le matériel de communication (100),
la première information comprend de l'information pour demander l'établissement de la certification légale dans la zone en ce qui concerne l'équipement d'onde radio (100) qui réalise une émission/réception d'ondes radio en utilisant la norme prédéterminée ; et
l'appareil externe (300, 400) comprend un serveur prédéterminé lié à la certification légale.

16. Programme selon la revendication 15, dans lequel
l'ordinateur (200) comprend un stockage (203) qui stocke une deuxième information qui est de l'information sur la certification légale pour des parties d'équipement d'onde radio pour chaque zone ; et
le procédé de traitement de l'information comprend en outre la réception de l'information de position sur le véhicule (10) et d'une troisième information, qui est de l'information identifiant l'équipement d'onde radio (100), provenant du véhicule (10) pour réaliser le processus de détermination prédéterminé sur la base de la deuxième information, de l'information identifiée sur la zone et de la troisième information.
